# FASCICULE DE BREVET EUROPEEN

(11) **EP 0 769 870 B1**
(45) Date de publication et mention de la délivrance du brevet: **23.12.1998**
(21) Numéro de dépôt: 96460034.0
(22) Date de dépôt: 15.10.1996
(51) Int. Cl.: H04N 5/04

(54) **Circuit de synchronisation**
Synchronisierungsschaltung
Synchronizing circuit

(30) Priorité: 20.10.1995 FR 9512611
(43) Date de publication de la demande: 23.04.1997
(73) Titulaire: SGS-THOMSON MICROELECTRONICS S.A., 94250 Gentilly (FR)
(72) Inventeur: Marsanne, Sébastien, Cabinet Ballot-Schmit, 56100 Lorient (FR); Berger, Philippe, Cabinet Ballot-Schmit, 56100 Lorient (FR); Chanel, Vincent, Cabinet Ballot-Schmit, 56100 Lorient (FR)
(74) Mandataire: Schmit, Christian Norbert Marie

(56) Documents cités:
- GB-A- 2 094 083
- US-A- 5 339 111
- PATENT ABSTRACTS OF JAPAN vol. 012, no. 204 (E-620), 11 Juin 1988 & JP-A-63 002468 (MITSUBISHI ELECTRIC CORP), 7 Janvier 1988,
- PATENT ABSTRACTS OF JAPAN vol. 014, no. 374 (E-0964), 13 Août 1990 & JP-A-02 135995 (SONY CORP), 24 Mai 1990,

## Description

La présente invention a pour objet un circuit de synchronisation. Elle peut trouver son application dans le domaine des moniteurs, et plus particulièrement dans le domaine des récepteurs de télévision.

Un tel circuit de synchronisation permet de rythmer les balayages d'un faisceau d'électrons sur un écran. En effet, les signaux de synchronisation dont il est question contiennent une information de temps permettant de fixer le début d'une ligne et le début d'une trame. On rappelle qu'une trame est l'ensemble des lignes nécessaires pour former une image sur l'écran d'un moniteur.

Des signaux de synchronisation horizontale ainsi que des signaux de synchronisation verticale, appelés également respectivement signaux de synchronisation de ligne et signaux de synchronisation de trame, sont utilisés pour produire, à partir d'une boucle à verrouillage de phase, des signaux de balayage nécessaires au balayage de l'écran par un faisceau d'électrons.

L'invention sera décrite dans le contexte du traitement des signaux de télévision, sans qu'on puisse y voir une quelconque limitation de la portée de l'invention.

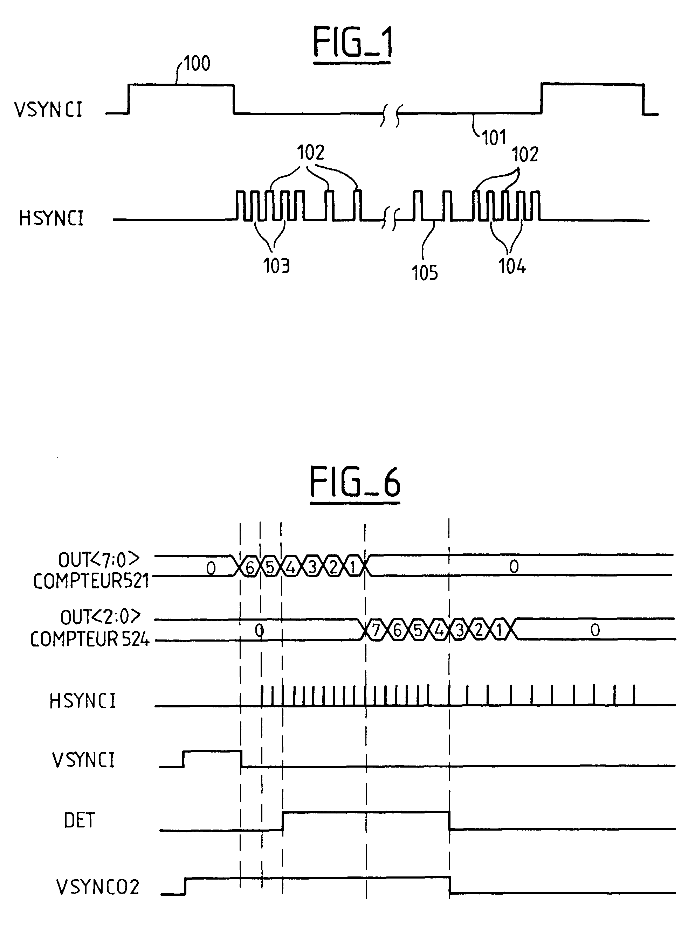

Dans le récepteur de télévision, les signaux de synchronisation fournis à la boucle à verrouillage de phase sont des signaux de synchronisation extraits du signal vidéo. La figure 1 représente un signal de synchronisation verticale VSYNCI et un signal de synchronisation horizontale HSYNCI, tous deux extraits d'un signal vidéo. Le signal de synchronisation verticale VSYNCI est un signal rectangulaire périodique alternant niveau haut 100, appelé impulsion de retour trame, et niveau bas 101. Pendant l'impulsion de retour trame 100 du signal de synchronisation verticale VSYNCI, le fonctionnement de la boucle à verrouillage de phase, qui est en aval des circuits de synchronisation, est inhibé.

Par ailleurs, le signal de synchronisation horizontale HSYNCI est une suite d'impulsions de synchronisation de ligne 102 identiquement espacées dans le temps, chaque impulsion correspondant à la synchronisation d'une ligne. Ce signal possède également des impulsions de signalisation en début de trame, 103, et en fin de trame, 104, respectivement appelées impulsions de post-égalisation et impulsions de pré-égalisation. Les impulsions de signalisation en fin de trame, 104, annoncent l'impulsion de retour trame. Quant aux impulsions de signalisation en début de trame, 103, elles sont représentatives du standard de visualisation utilisé.

En effet, selon la résolution envisagée, ainsi que selon les normes de visualisation utilisées dans les différentes régions du monde, le nombre de lignes visualisées sur l'écran varie. Alors qu'on connaît actuellement des images avec 525 lignes et 625 lignes, les nouvelles normes prévoient 1024 lignes. Par ailleurs, la fréquence de rafraîchissement des images sur l'écran, 25 images par secondes, dépend également des standards.

Ces impulsions de signalisation en début et en fin de trame sont intercalées entre les impulsions de synchronisation de ligne. Il en résulte que la fréquence des impulsions du signal de synchronisation horizontale, en début et en fin de trame, est deux fois plus élevée que pendant le reste de la trame. La forme des signaux de synchronisation pose alors un problème.

En effet, le changement de fréquence dû à la signalisation perturbe le fonctionnement de la boucle à verrouillage de phase qui est en aval du circuit de synchronisation. La boucle à verrouillage de phase sort alors de sa plage de fonctionnement.

En conséquence, la multiplicité des standards impose l'utilisation de systèmes permettant de traiter tous les types de signaux de synchronisation. Ces systèmes doivent être en mesure d'analyser les signaux de synchronisation, quel que soit le standard de visualisation utilisé, et de les modifier de manière à améliorer le fonctionnement des boucles à verrouillage de phase. En outre, ces systèmes peuvent comprendre des circuits destinés à générer des signaux de synchronisation.

On propose donc, selon l'invention, un circuit capable de recevoir des signaux de synchronisation horizontale et verticale quelconques, de mesurer leur période ou d'acquérir des informations représentatives de la forme de ces signaux, et de produire un signal de synchronisation horizontale dépourvu d'impulsions signalisation 104 en fin de trame et un signal de synchronisation verticale dont l'impulsion de retour trame 100 est prolongée pendant les impulsions de signalisation en début de trame 103. Ce faisant, le fonctionnement de la boucle à verrouillage de phase est suspendu pendant les impulsions de signalisation en début de trame 103 et elle ne reçoit plus les impulsions signalisation en fin de trame 104.

Un but de l'invention est de créer un circuit de synchronisation pouvant être intégré dans tous types de moniteurs.

L'invention a donc pour objet un circuit de synchronisation pour écrans à circuit de balayage recevant un signal d'entrée de synchronisation horizontale comportant des impulsions de synchronisation de ligne, un premier type d'impulsion de signalisation en début de trame et un deuxième type d'impulsion de signalisation en fin de trame, un signal d'entrée de synchronisation verticale comportant des impulsions de retour trame, et un signal d'horloge, lequel circuit de synchronisation comporte:
- un circuit de génération de synchronisation horizontale pour produire un premier signal de sortie de synchronisation horizontale à partir du signal d'horloge, et
- un circuit de génération de synchronisation verticale pour produire un premier signal de sortie de synchronisation verticale à partir du premier signal de sortie de synchronisation horizontale,
et est caractérisé en ce qu'il comporte:
- un circuit d'analyse de synchronisation horizontale, recevant en entrée le signal d'entrée de synchronisation horizontale et le signal d'horloge, et produisant une valeur représentative de l'intervalle de temps entre deux impulsions de synchronisation de ligne du signal d'entrée de synchronisation horizontale,
- un circuit de correction de synchronisation horizontale délivrant un second signal de sortie de synchronisation horizontale dépourvu d'impulsions du deuxième type en fin de trame et un signal de détection d'impulsion de signalisation, à partir dudit signal d'entrée de synchronisation horizontale, du signal d'horloge et de la valeur représentative de l'intervalle de temps entre deux impulsions de synchronisation de ligne du signal d'entrée de synchronisation horizontale,
- un circuit d'analyse de synchronisation verticale, recevant en entrée ledit signal d'entrée de synchronisation verticale et le signal d'entrée de synchronisation horizontale, et produisant une valeur représentative du nombre de lignes entre deux impulsions de retour trame du signal d'entrée de synchronisation verticale, et
- un circuit de correction de synchronisation verticale délivrant un second signal de sortie de synchronisation verticale dont l'impulsion de retour de trame est prolongée pendant les impulsions de signalisation du premier type en début de trame, à partir dudit signal d'entrée de synchronisation verticale, du signal d'entrée de synchronisation horizontale et du signal de détection d'impulsion de signalisation.

Selon des caractéristiques secondaires:
- le circuit de génération de synchronisation horizontale peut comporter un premier registre dans lequel est mémorisée une valeur représentative de la période du premier signal de sortie de synchronisation horizontale;
- le circuit d'analyse de synchronisation horizontale peut comporter un circuit pour mesurer l'intervalle de temps entre deux impulsions de synchronisation de ligne du signal de synchronisation horizontale et un deuxième registre pour mémoriser la valeur représentative dudit intervalle de temps;
- le circuit de correction de synchronisation horizontale peut comporter un circuit pour produire le second signal de sortie de synchronisation horizontale ne comprenant pas pas le deuxième type d'impulsion de signalisation en fin de trame;
- le circuit de correction de synchronisation horizontale peut comporter un circuit pour détecter le premier et le deuxième type d'impulsion de signalisation délivrant le signal de détection d'impulsion de signalisation;
- le circuit de correction de synchronisation horizontale peut comporter un troisième registre dans lequel est mémorisée la valeur représentative de l'intervalle de temps entre deux impulsions de synchronisation de ligne du signal de synchronisation horizontale;
- le circuit de génération de synchronisation verticale peut comporter un quatrième registre dans lequel est mémorisée une valeur égale au nombre de lignes pendant une période du premier signal de sortie de synchronisation verticale;
- le circuit d'analyse de synchronisation verticale peut comporter un circuit pour mesurer un nombre de lignes entre deux impulsions de retour trame du signal d'entrée de synchronisation verticale et un cinquième registre pour mémoriser la valeur représentative dudit nombre de lignes;
- le circuit de correction de synchronisation verticale peut comporter un circuit pour produire le second signal de sortie de synchronisation verticale dont les impulsions de retour trame sont prolongées pendant les impulsions de signalisation du premier type du signal d'entrée de synchronisation horizontale.

Les particularités de l'invention apparaîtront clairement dans la description suivante faite en regard des figures annexées qui représentent:
- la figure 1, un diagramme temporel de signaux de synchronisation horizontale et verticale,
- la figure 2, un schéma fonctionnel d'un circuit de synchronisation selon l'invention,
- la figure 3a, une réalisation particulière du circuit de génération de synchronisation horizontale selon l'invention,
- la figure 3b, une réalisation particulière du circuit de génération de synchronisation verticale selon l'invention,
- la figure 4a, une réalisation particulière du circuit d'analyse de synchronisation horizontale selon l'invention,
- la figure 4b, une réalisation particulière du circuit d'analyse de synchronisation verticale selon l'invention,
- la figure 5a, une réalisation particulière du circuit de correction de synchronisation horizontale selon l'invention,
- la figure 5b, une réalisation particulière du circuit de correction de synchronisation verticale selon l'invention, et
- la figure 6, un chronogramme des principaux signaux intervenant dans le fonctionnement du circuit de correction de synchronisation verticale.

La figure 1a représentant un signal de synchronisation horizontale HSYNCI et un signal de synchronisation verticale VSYNCI a été décrite précédemment.

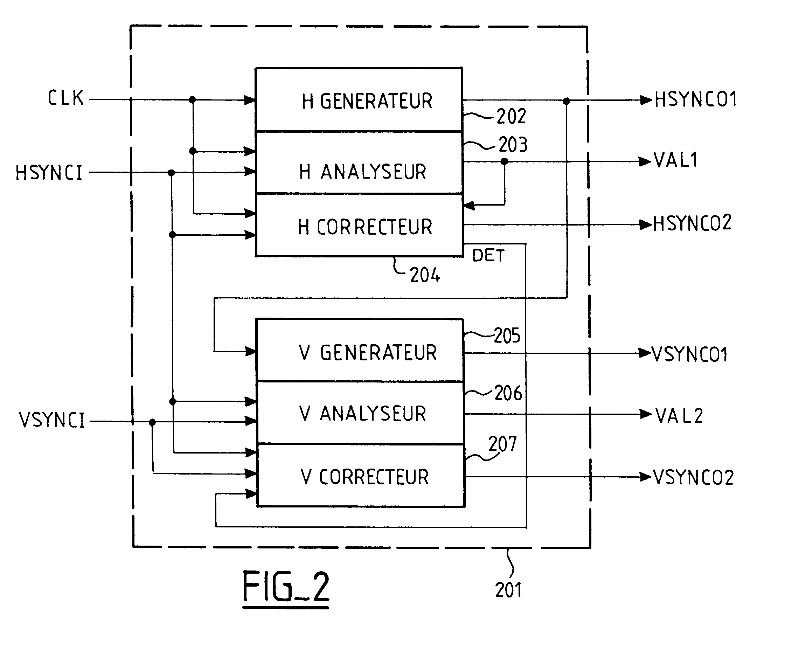

La figure 2 représente un schéma fonctionnel du circuit de synchronisation selon l'invention. Le circuit de synchronisation 201 permet de traiter à la fois un signal de synchronisation horizontale et un signal de synchronisation verticale. Le circuit de synchronisation 201 comprend:
- un circuit de génération de synchronisation horizontale 202 recevant un signal d'horloge CLK et délivrant un premier signal de sortie de synchronisation horizontale HSYNCO1,
- un circuit d'analyse de synchronisation horizontale 203, recevant en entrée le signal d'entrée de synchronisation horizontale HSYNCI et le signal d'horloge CLK, et produisant une valeur VAL1 représentative de l'intervalle de temps entre deux impulsions de synchronisation de ligne du signal d'entrée de synchronisation horizontale HSYNCI,
- un circuit de correction de synchronisation horizontale 204 délivrant un second signal de sortie de synchronisation horizontale HSYNCO2 et un signal de détection d'impulsion de signalisation DET, à partir dudit signal d'entrée de synchronisation horizontale HSYNCI, du signal d'horloge CLK et de la valeur VAL1 représentative de l'intervalle de temps entre deux impulsions de synchronisation de ligne du signal d'entrée de synchronisation horizontale,
- un circuit de génération de synchronisation verticale 205 pour produire un premier signal de sortie de synchronisation verticale VSYNCO1 à partir du premier signal de sortie de synchronisation horizontale HSYNCO1,
- un circuit d'analyse de synchronisation verticale 206, recevant en entrée le signal d'entrée de synchronisation verticale VSYNCI et le signal d'entrée de synchronisation horizontale HSYNCI, et produisant une valeur VAL2 représentative du nombre de lignes entre deux impulsions de retour trame du signal d'entrée de synchronisation verticale, et
- un circuit de correction de synchronisation verticale 207 délivrant un second signal de sortie de synchronisation verticale VSYNCO2, à partir dudit signal d'entrée de synchronisation verticale VSYNCI, du signal d'entrée de synchronisation horizontale HSYNCI et du signal de détection d'impulsion de signalisation DET.

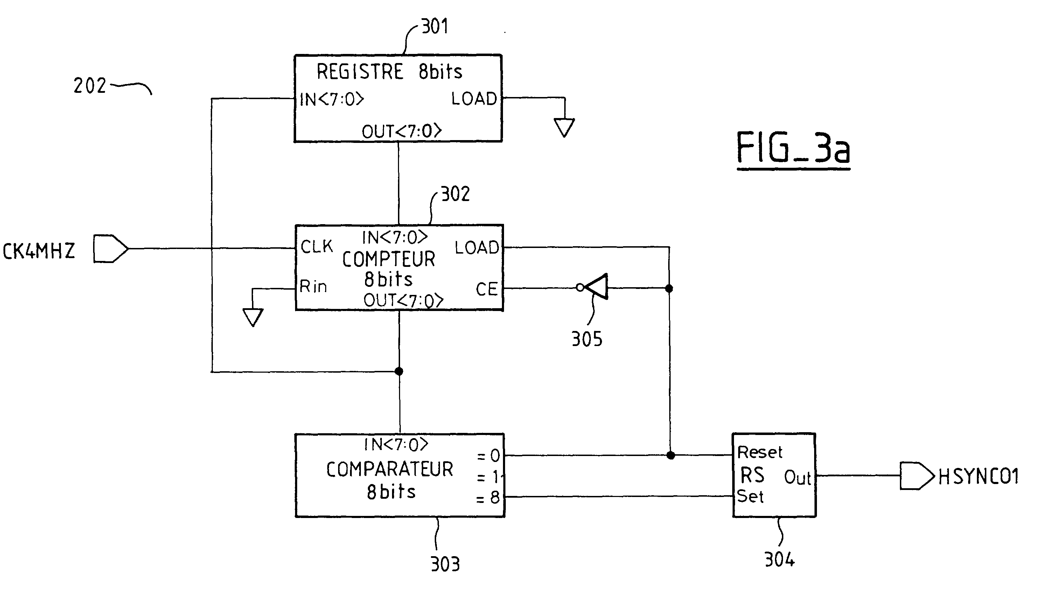

Un mode de réalisation des différents éléments du circuit de synchronisation 201 est illustré dans les figures 3a-5b.

Tout d'abord, le circuit de synchronisation 201 comprend un générateur de synchronisation horizontale 202 et un générateur de synchronisation verticale 205 qui, en l'absence de synchronisation dans les signaux à traiter par le moniteur, fournissent un signal de synchronisation horizontale HSYNCO1 et un signal de synchronisation verticale VSYNCO1.

Le circuit de génération de synchronisation horizontale 202 illustré figure 3a comprend un registre 8 bits 301, un compteur 8 bits 302, un comparateur 8 bits 303, une bascule RS 304 et une porte inverseuse 305. L'entrée de charge LOAD du registre 301 est connectée à la masse. La sortie OUT<7:0> du registre 301 est reliée à l'entrée IN<7:0> du compteur 302 et réciproquement.

Par ailleurs, la sortie OUT<7:0> du compteur 302 est reliée à l'entrée IN<7:0> du comparateur 303. L'entrée Rin du compteur 302 est reliée à la masse. En ce qui concerne le comparateur 303, il comporte une première sortie =8 et une seconde sortie =0. Ces sorties, =8 et =0, sont reliées respectivement à l'entrée Set et à l'entrée Reset de la bascule RS 304. La sortie =0 est, quant à elle, également reliée à l'entrée LOAD du compteur 302 et, par l'intermédiaire d'une porte inverseuse 305, à l'entrée de validation CE du compteur 302. Enfin, l'entrée CLK du compteur 302 reçoit le signal d'horloge CK4MHZ de fréquence 4 mégahertz et la sortie Out de la bascule RS 304 délivre un signal de sortie de synchronisation horizontale HSYNCO1.

Le circuit de génération de synchronisation horizontale 202 fonctionne de la manière suivante: une valeur représentative de la période du signal de synchronisation horizontale que l'on va produire, est mémorisée au préalable dans le registre 301. Dès que le compteur 302 est chargée avec la valeur du registre 301, le compteur 302 commence à décompter à partir de cette valeur et au rythme du signal d'horloge CK4MHZ. Lorsque l'état du compteur 302 est égal à 8, la bascule 304 change d'état et le signal de sortie HSYNCO1 passe à 1. Le signal HSYNCO1 repasse à 0 au moment où le compteur 302 atteint la valeur 0. Le compteur 302 est alors désactivé. Il se recharge ensuite avec la valeur contenue dans le registre 301 et recommence à décompter.

Dans le mode de réalisation choisi à la figure 3a, la durée du niveau haut du signal de sortie de synchronisation horizontale HSYNCO1 vaut 2 microsecondes. En revanche, sa période est fonction de la valeur contenue dans le registre 301.

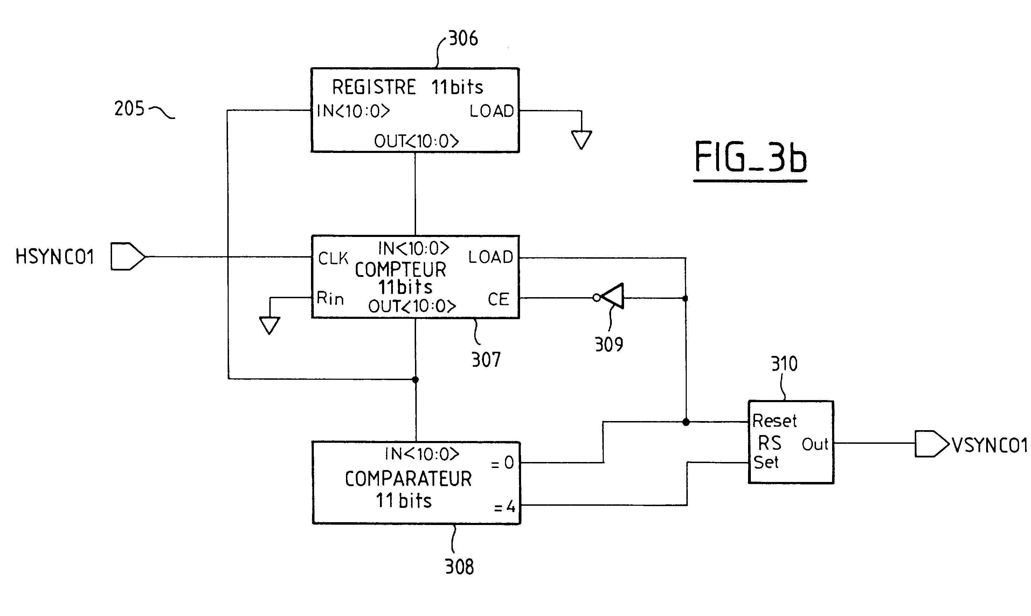

Le circuit de synchronisation 201 comporte également un circuit de génération de synchronisation verticale 205 représenté à la figure 3b. Le schéma électronique de ce circuit 205 est décrit en regard de la figure 3a. Il est identique à celui proposé à la figure 3a à la différence près que le registre 8bits, le compteur 8 bits et le comparateur 8 bits sont remplacés par un registre 11 bits 306, un compteur 11 bits 307 et un comparateur 11 bits 308 et que les références des éléments ont changées. Le comparateur 11 bits comporte une sortie =4 qui délivre un niveau haut lorsque l'état du compteur 307 vaut 4. Le schéma comporte également une bascule RS 310 identique à la bascule RS 304.

Compte tenu que l'on décompte un nombre de lignes, le compteur 307 décompte au rythme du signal de synchronisation horizontale HSYNCO1. La sortie Out de la bascule RS 310 délivre alors un signal de synchronisation verticale VSYNCO1.

En ce qui concerne le fonctionnement de ce circuit, le signal VSYNCO1 passe à 1 lorsque l'état présent à la sortie OUT<10:0> du compteur 307 vaut 4, et il repasse à 0 au moment où ce même état atteint le nombre 0.

Dans cet exemple, on a donc choisi de produire un signal de synchronisation verticale VSYNCO1 avec une impulsion de retour trame dont la durée est de 4 lignes.

Ces deux circuits, 202 et 205, permettent donc, en l'absence de synchronisation, de produire des signaux de synchronisation dépourvus de signalisation.

Selon une caractéristique importante de l'invention, le circuit de synchronisation 201 permet également d'analyser des signaux de synchronisation horizontale ainsi que des signaux de synchronisation verticale présents à l'entrée du circuit. On peut obtenir ainsi des informations sur la forme de ces signaux de synchronisation.

A ce titre, le circuit de synchronisation 201 comporte un circuit d'analyse de synchronisation horizontale 203 et un circuit d'analyse de synchronisation verticale 206.

Ces circuits d'analyse sont activés à chaque changement de standard. Les informations obtenues par ces circuits peuvent avoir des utilisations très diverses. Dans notre exemple, l'information acquise par le circuit d'analyse 203, est exploitée par le circuit de correction 204.

En outre, le fait de connaître le nombre de lignes par trame par exemple, peut être utilisé par un dispositif d'affichage de message à l'écran pour centrer un texte au milieu de l'écran.

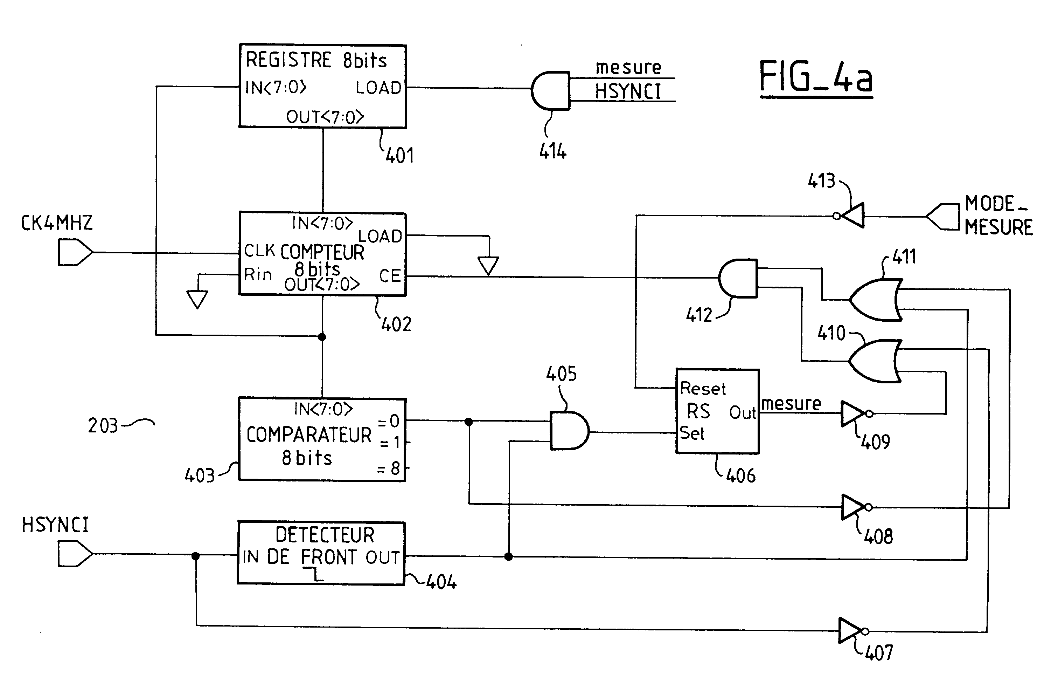

La figure 4a illustre une réalisation possible du circuit d'analyse de synchronisation horizontale 203. Un tel circuit permet de mesurer l'intervalle de temps entre deux impulsions de synchronisation de ligne d'un signal de synchronisation horizontale entrant HSYNCI et de mémoriser une valeur VAL1 représentative de cet intervalle dans un registre. Par la suite, cette valeur VAL1 sera utilisée par le circuit de correction de synchronisation horizontale 204. Le circuit 203 est activé durant une portion du signal de synchronisation horizontale ne contenant pas d'impulsions de signalisation.

Le circuit 203 comprend un registre 8 bits 401, un compteur 8 bits 402, un comparateur 8 bits 403 et une bascule RS 406. En pratique, ces éléments, bien qu'ils soient référencés différemment, sont les mêmes que ceux utilisés à la figure 3a. Un microprocesseur, non décrit, permet alors d'organiser les connexions entre ces différents éléments suivant l'utilisation voulue.

Le registre 401, le compteur 402 et le comparateur 403 sont connectés entre eux de la même manière que le registre 301, le compteur 302 et le comparateur 303 du circuit 202 illustré figure 3a. Néanmoins, les entrées LOAD et Rin du compteur 402 sont connectées à la masse, la sortie =8 du comparateur 403 n'est pas utilisée et sa sortie =0 est reliée d'une part à une première entrée d'une porte ET 405 et d'autre part, par l'intermédiaire d'une porte inverseuse 408, à une première entrée d'une porte OU 411.

Par ailleurs, le signal de synchronisation horizontale HSYNCI à analyser, attaque l'entrée IN d'un détecteur de front descendant 404 et une première entrée d'une porte OU 410. La sortie Out du détecteur 404 est reliée à une seconde entrée de la porte ET 405 et à une seconde entrée de la porte OU 411. La sortie de la porte ET 405 est reliée à l'entrée d'une bascule RS 406.

La bascule RS 406 délivre un signal appelé mesure. Ce signal passe à un niveau haut après le front descendant d'une impulsion de synchronisation de ligne du signal HSYNCI. La mesure de l'intervalle de temps entre deux impulsions de synchronisation de ligne s'effectue lorsque ce signal à un niveau haut.

Par ailleurs, l'entrée Reset de la bascule RS 406 reçoit un signal d'activation du circuit 203, MODE_ MESURE, par l'intermédiaire d'une porte inverseuse 413. La sortie Out de cette bascule est connectée par l'intermédiaire d'une porte inverseuse 409, à une deuxième entrée de la porte OU 410. Les sorties des portes OU, 410 et 411, sont connectées chacune à une entrée d'une porte ET 412, dont la sortie est reliée à l'entrée de validation CE du compteur 402. Par ailleurs une porte ET 414 reçoit sur une première entrée le signal de synchronisation horizontale à analyser HSYNCI et sur une deuxième entrée le signal mesure délivré par la bascule 406. Enfin, la sortie de la porte ET 414 est connectée à l'entrée LOAD du registre 401.

Le fonctionnement du circuit d'analyse 203 est le suivant: un signal MODE_MESURE déclenche le début de l'analyse du signal de synchronisation horizontale HSYNCI entrant. Si le compteur 402 est à 0 et que le signal HSYNCI présente un front descendant, le compteur 402 commence à compter au rythme du signal d'horloge CK4MHZ. Dès que le signal HSYNCI repasse à 1, le compteur 402 se bloque et la valeur présente à la sortie OUT<7:0> du compteur 402 est chargée dans le registre 401. Cette valeur VAL1 correspond au nombre d'impulsions du signal d'horloge CK4MHZ entre deux impulsions de synchronisation de ligne.

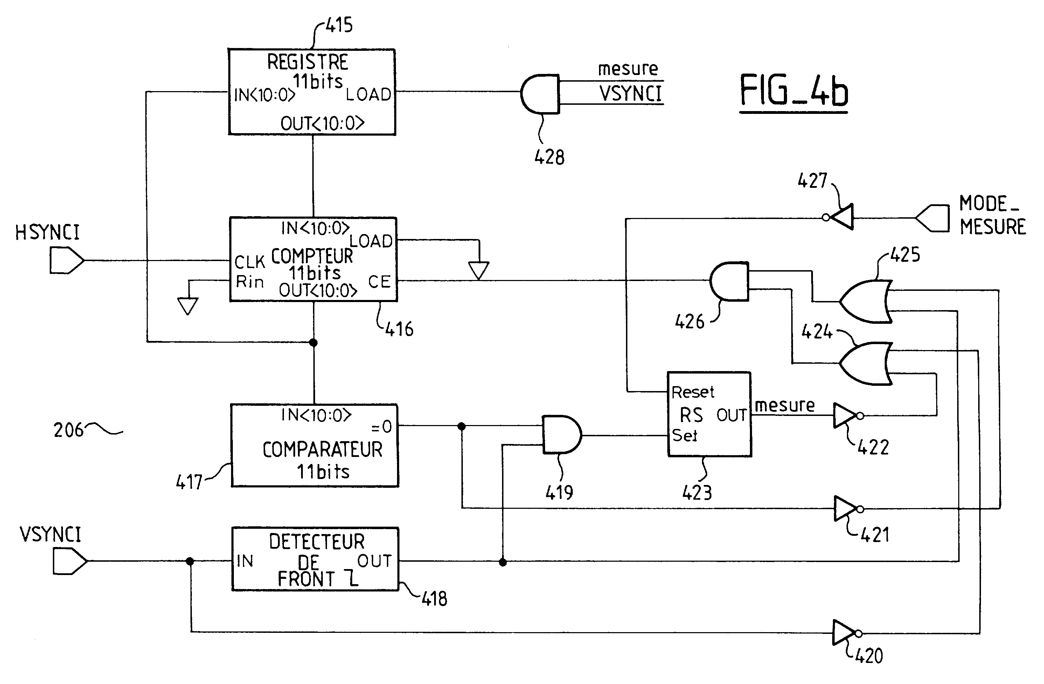

Le circuit de synchronisation 201 comporte également un circuit d'analyse de synchronisation verticale 206 représenté à la figure 4b. Un tel circuit permet de mesurer un nombre de lignes entre deux impulsions de retour trame du signal de synchronisation verticale VSYNCI. En fait, ce circuit compte le nombre d'impulsions de synchronisation de ligne du signal HSYNCI entre deux impulsions de retour trame du signal VSYNCI. Le schéma électronique de ce circuit est décrit en regard du schéma de la figure 4a.

De même que pour la figure 3a et 3b, les schémas électroniques des figures 4a et 4b sont identiques à la différence près que le registre 8bits, le compteur 8 bits et le comparateur 8 bits de la figure 4a sont remplacés par un registre 11 bits 415, un compteur 11 bits 416 et un comparateur 11 bits 417.

Compte tenu que l'on compte un nombre de lignes, le compteur 416 compte au rythme du signal de synchronisation horizontale HSYNCI. Le signal à analyser est à présent un signal de synchronisation verticale VSYNCI.

Le circuit d'analyse 206 compte le nombre d'impulsions du signal de synchronisation horizontale HSYNCI entre deux impulsions de retour trame du signal de synchronisation verticale VSYNCI et emmagasine une valeur VAL2 représentative de cette durée dans le registre 415. Les informations récoltées par ces circuits d'analyse vont permettre de générer des signaux de synchronisation horizontale et verticale plus appropriés au fonctionnement de la boucle à verrouillage de phase.

En effet, selon une autre caractéristique de l'invention, le circuit de synchronisation 201 modifie les signaux de synchronisation horizontale et verticale de telle sorte que le fonctionnement de la boucle à verrouillage de phase ne soit pas perturbée par les impulsions de signalisation présentes dans le signal de synchronisation horizontale. A cet effet, il comporte un circuit de correction de synchronisation horizontale 204 et un circuit de correction de synchronisation verticale 207.

On connaît l'intervalle de temps entre deux impulsions de synchronisation de ligne par l'intermédiaire de la valeur VAL1. Par ailleurs, la partie centrale du signal HSYNCI dépourvue de signalisation, permet de repérer sur une période du signal HSYNCI les impulsions de synchronisation de ligne. Donc, en fin de trame, on sait différencier les impulsions de signalisation et les impulsions de synchronisation de ligne. A partir de ces informations, le circuit de correction 204 produit un signal de synchronisation horizontale HSYNCO2 ne comportant pas d'impulsions de signalisation 104 en fin de trame.

En ce qui concerne les impulsions du signal de synchronisation en début de trame, on ne peut différencier les impulsions de synchronisation de ligne et les impulsions de signalisation. L'invention propose donc de produire un signal de synchronisation verticale VSYNCO2 dont l'impulsion de retour trame est prolongée en début de trame jusqu'à ce qu'il n'y ait plus d'impulsions de signalisation 103. C'est la fonction du circuit de correction 207.

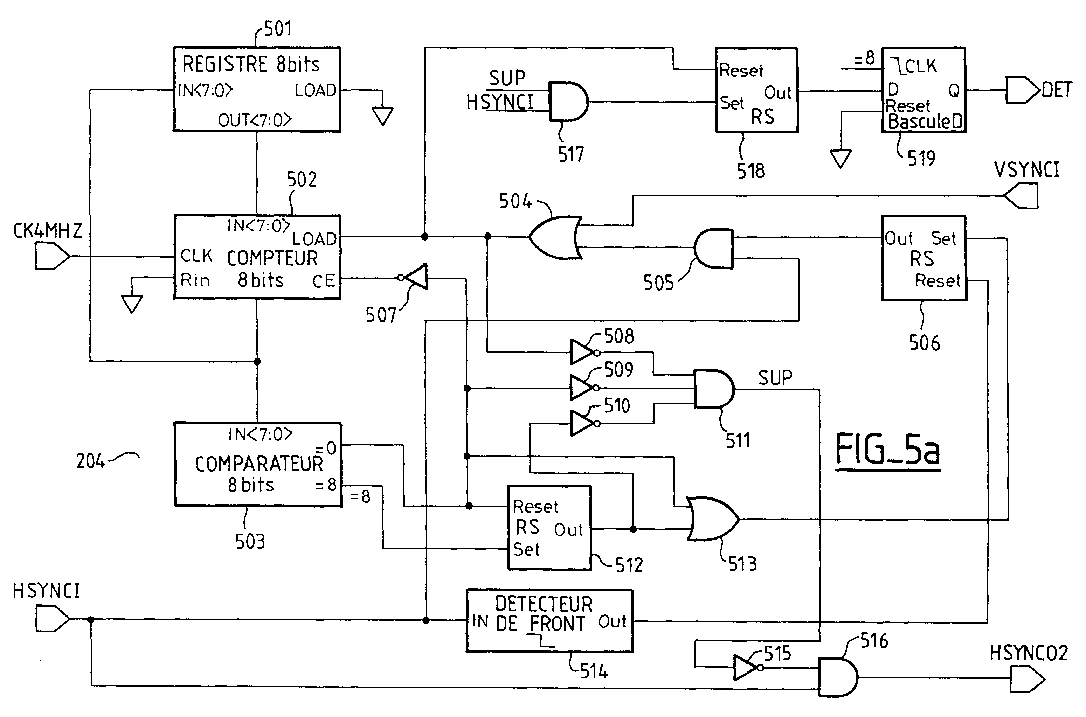

La structure du circuit de correction 204, illustrée figure 5a, est la suivante: le circuit de correction 204 comporte un registre 8 bits 501, un compteur 8 bits 502 et un compteur 8 bits 503 dont les entrées et les sorties de données sont connectées comme à la figure 4a. L'entrée LOAD du registre 501 et l'entrée Rin du compteur 502 sont reliées à la masse. L'entrée CLK du compteur reçoit un signal d'horloge CK4MHZ, de fréquence 4 mégahertz.

Le signal de synchronisation horizontale à corriger HSYNCI attaque une première entrée d'une porte ET 505, une première entrée d'une porte ET 516 et l'entrée IN d'un détecteur de front descendant 514. En ce qui concerne le comparateur 503, sa sortie =0 est connectée à la fois à l'entrée Reset d'une bascule RS 512, à une première entrée d'une porte OU 513, à une première entrée d'une porte ET 511 par l'intermédiaire d'une porte inverseuse 509, et à l'entrée de validation CE du compteur 502 par l'intermédiaire d'une porte inverseuse 507.

Par ailleurs, la sortie =8 du comparateur 503 est connectée à l'entrée Set de la bascule RS 512. La sortie Out de cette bascule est , pour sa part, reliée à une seconde entrée de la porte OU 513 et, par l'intermédiaire d'une porte inverseuse 510, à une deuxième entrée de la porte ET 511. La sortie de la porte OU 513 est connectée à l'entrée Set d'une bascule RS 506. L'entrée Reset de cette bascule est connectée à la sortie Out du détecteur de front descendant 514 et sa sortie Out est reliée à une deuxième entrée de la porte ET 505, dont la sortie est reliée à une première entrée d'une porte OU 504.

Dans ce circuit, le signal de synchronisation verticale VSYNCI est utilisé pour bloquer le compteur 520 pendant l'impulsion de retour trame. Le signal de synchronisation verticale VSYNCI attaque une seconde entrée de la porte OU 504, dont la sortie est reliée d'une part à l'entrée LOAD du compteur 502 et d'autre part, par l'intermédiaire d'une porte inverseuse 508, à une troisième entrée de la porte ET 511. La sortie de la porte ET 511 délivre un signal de suppression d'impulsion SUP et est reliée à une seconde entrée de la porte ET 516 par l'intermédiaire d'une porte inverseuse 515. Ce signal de suppression d'impulsion permet de supprimer les impulsions de signalisation. La sortie de la porte ET 516 délivre le signal de synchronisation horizontale corrigé HSYNCO2.

Le fonctionnement de ce circuit est le suivant: préalablement à la correction, le registre 501 est préchargé avec la valeur VAL1 représentative de l'intervalle de temps entre deux impulsions de synchronisation de ligne obtenue par le circuit d'analyse 203.

Lorsque le signal de synchronisation horizontale HSYNCI à corriger présente un front descendant d'une impulsion de synchronisation de ligne, le compteur 502 commence à décompter à partir de la valeur de départ contenue dans le registre 501. Le compteur 502 décompte alors au rythme du signal d'horloge CK4MHZ. Au même moment, le signal de suppression d'impulsion de signalisation SUP devient actif et le reste jusqu'à ce que le compteur 502 atteigne le nombre 8. Lorsque le signal HSYNCI présente une impulsion de signalisation, le signal de suppression d'impulsion SUP étant à 1, le signal de sortie HSYNCO2 reste à 0. En revanche, dès que le compteur 502 atteint la valeur 0, l'impulsion du signal d'entrée HSYNCI est conservée dans le signal de sortie HSYNCO2.

On obtient donc un signal de sortie HSYNCO2 débarrassé des impulsions de signalisation en fin de trame. Ce circuit de correction 204 agit pendant une période entière du signal de synchronisation horizontale HSYNCI. Cependant, il ne permet de modifier correctement le signal HSYNCI en début de trame car il ne peut pas différencier les impulsions de signalisation et les impulsions de synchronisation de ligne. Néanmoins, ce circuit 204 comporte un circuit 517-519 de détection des impulsions de signalisation du signal HSYNCI. Ce circuit transmettra au second circuit de correction 207 une information indiquant la présence d'impulsions de signalisation en début de trame.

Ce circuit de détection comporte une porte ET 517 recevant sur une première entrée le signal de suppression d'impulsion SUP et sur une seconde entrée le signal de synchronisation horizontale HSYNCI. La sortie de cette porte est reliée à l'entrée Set d'une bascule RS 518 dont l'entrée Reset est reliée à la sortie de la porte OU 504 et dont la sortie Out est reliée l'entrée D d'une bascule D 519. L'entrée Reset de cette bascule D est connectée à la masse alors que l'entrée CLK est connectée à la sortie =8 du comparateur 503. Enfin, la sortie Q de la bascule D 519 délivre un signal de détection d'impulsion de signalisation DET. Ce signal DET est utilisé par le circuit de correction 207 du signal de synchronisation verticale VSYNCI.

Ce circuit 517-519 fonctionne de la manière suivante: le signal de suppression d'impulsion SUP est à 1 entre deux impulsions de synchronisation de ligne. Donc, lorsque le signal HSYNCI présente une impulsion de signalisation, l'entrée Set de la bascule RS 518 passe à 1 et le signal DET passe à 1 à la fin de la période du signal HSYNCI. En l'absence d'impulsion de signalisation, le signal DET reste à 0.

On remarque que le signal DET est décalée d'une période par rapport au signal SYNCI. En effet, il faut d'abord lire toute une période de signal avant de savoir si elle contient une impulsion de signalisation.

Le circuit de synchronisation 201 comporte également un circuit de correction de synchronisation verticale 207 pour annihiler l'action des impulsions de signalisation en début de trame sur le fonctionnement de la boucle à verrouillage de phase.

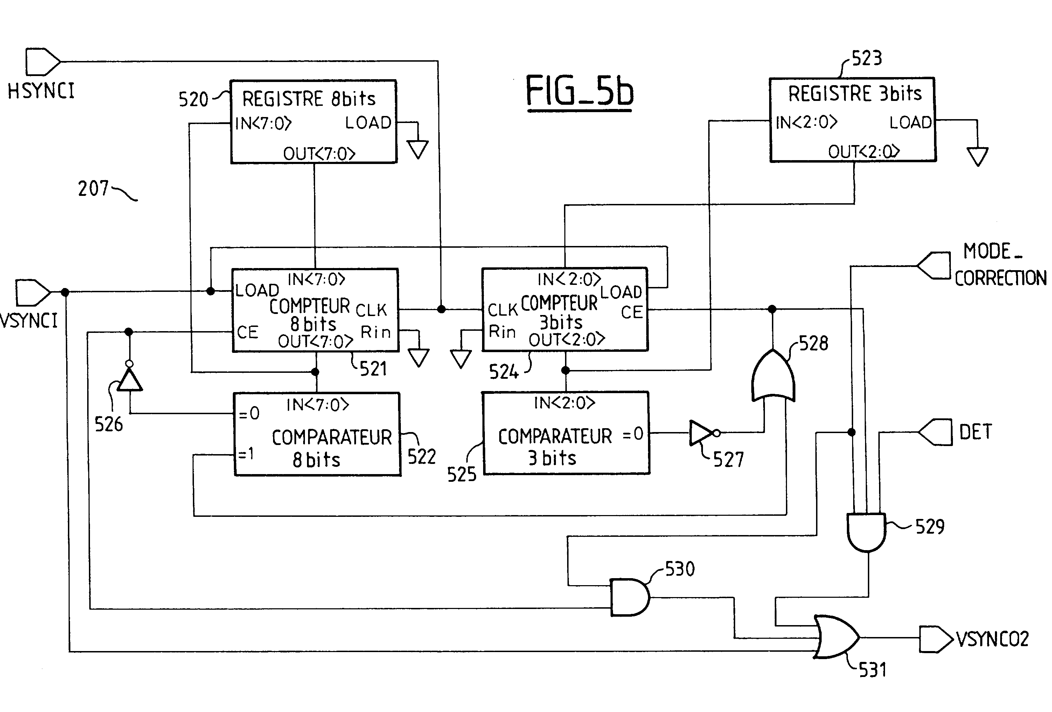

Le principe de fonctionnement de ce circuit 207 est de prolonger l'impulsion de retour trame pendant les impulsions de signalisation en début de trame. Dans le mode de réalisation décrit à la figure 5b, l'impulsion de retour trame est prolongée automatiquement d'un nombre de lignes fixe et mémorisé dans un registre. Ce nombre correspond au nombre minimal de lignes occupées par la signalisation, quel que soit le standard. On aurait pu envisager de mémoriser dans le registre le nombre maximal de lignes occupées par la signalisation, mais, dans ce cas, la boucle à verrouillage de phase aurait été inhibée pendant un maximum de temps. L'impulsion de retour trame est prolongée pendant une durée supplémentaire s'il reste des impulsions de signalisation en début de trame dans le signal HSYNCI. En d'autres termes, tant que le signal de détection d'impulsion de signalisation DET est à un niveau haut, l'impulsion de retour trame est prolongée d'une durée fixe et d'une durée supplémentaire s'il y a lieu.

Pour se faire, le circuit de correction 207 illustré figure 5b comporte un registre 8 bits 520, un compteur 8 bits 521 et un comparateur 8 bits 522. La sortie OUT<7:0> du registre 520 est connectée à l'entrée IN<7:0> du compteur 520, et réciproquement. Par ailleurs, la sortie OUT<7:0> du compteur 521 est reliée à l'entrée IN<7:0> du comparateur 522. L'entrée LOAD du registre 520 et l'entrée Rin du compteur 521 sont reliées à la masse.

Le circuit 5b comporte également un registre 3 bits 523, un compteur 3 bits 524 et un comparateur 3 bits 525. De la même façon, la sortie OUT<2:0> du registre 523 est connectée à l'entrée IN<2:0> du compteur 524, et réciproquement. De même, la sortie OUT<2:0> du compteur 524 est reliée à l'entrée IN<2:0> du comparateur 525. L'entrée LOAD du registre 523 et l'entrée Rin du compteur 524 sont reliées à la masse.

Le registre 520 contient le nombre minimal de lignes occupées par la signalisation quel que soit le standard. Par ailleurs le registre 523 contient le nombre 0.

Les entrées LOAD des compteurs 521 et 524 reçoivent le signal de synchronisation verticale VSYNCI alors que les entrées CLK reçoivent le signal de synchronisation horizontale HSYNCI. La sortie =0 du comparateur 522 est reliée, par l'intermédiaire d'une porte inverseuse 526, d'une part à l'entrée de validation CE du compteur 521 et d'autre part à une première entrée d'une porte ET 530. Par ailleurs, la sortie =1 du comparateur 522 est connectée à une première entrée d'une porte OU 528 et la sortie =0 du comparateur 525 est connectée à une seconde entrée de cette même porte. La sortie de la porte OU 528 est connectée d'une part à l'entrée de validation CE du compteur 524 et d'autre part à une première entrée d'une porte ET 529. Cette porte ET 529 reçoit également sur une deuxième entrée le signal de détection d'impulsion de signalisation DET délivré par le circuit de correction de synchronisation horizontale 205 et, sur une troisième entrée un signal de correction MODE_CORRECTION. Le signal MODE_CORRECTION permet de déclencher le fonctionnement du circuit de correction 207. Par ailleurs, ce signal de correction attaque une seconde entrée de la porte ET 530. La sortie des portes 529 et 530 sont reliées respectivement à une première et à une deuxième entrée d'une porte OU 531. Cette dernière reçoit également sur une troisième entrée le signal de synchronisation horizontale VSYNCI et délivre en sortie le signal de synchronisation verticale corrigé VSYNCO2.

Le fonctionnement de ce circuit de correction sera mieux compris en regard des chronogrammes donnés à la figure 6. Le registre 520 est préchargé avec le nombre minimum de lignes utilisées pour la signalisation dans les différents standards qui représente la partie fixe du prolongement de l'impulsion de retour trame. Dans notre exemple cette valeur est égale à 6. Par ailleurs, le registre 523 contient la valeur 0.

Le fonctionnement du circuit 207 est le suivant: à la fin de l'impulsion de retour trame du signal VSYNCI, le compteur 521 commence à décompter à partir de la valeur de départ contenue dans le registre 520. Pendant le décomptage du compteur 521, le signal de sortie VSYNCO2 est maintenu à 1. Dans l'exemple de la figure 6, l'impulsion de retour trame est prolongée automatiquement de 6 lignes. Ensuite, le compteur 524 commence à décompter au moment où la sortie OUT<7:0> du compteur 521 est égale à 1. Le compteur 524 passe à 7 lorsque le compteur 521 passe à 0. Tant que l'état du compteur 521 n'est pas égal à 0 et que le signal DET est à 1, le signal de sortie VSYNCO2 est maintenu à 1. A partir du moment où il n'y a plus d'impulsion de signalisation, Le signal de sortie de synchronisation verticale VSYNCO2 repasse à 0 avec un décalage d'une ligne dû au signal DET. Par ce circuit 207, l'impulsion de retour trame est donc prolongée pendant les impulsions de signalisation 104 de début de trame.

Par souci de clarté, les schémas illustrés figure 3b et 4b ont été réalisés avec des éléments utilisant des données de 11 bits. En pratique, ils peuvent être réalisés à partir d'éléments travaillant avec des données de 8 bits en série avec des éléments travaillant avec des données de 3 bits, et cela afin d'optimiser le schéma final du circuit de synchronisation 201 en utilisant les mêmes éléments pour les circuits 205, 206 et 207.

Donc, selon une réalisation avantageuse du circuit de synchronisation 201, les mêmes éléments sont utilisés pour les trois circuits 202, 203 et 204 traitant la synchronisation horizontale. Il en est de même pour les circuits 205, 206 et 207. Un microprocesseur, non décrit sur les figures, permet alors d'organiser les connexions entre ces différents éléments en fonction de l'utilisation du circuit de synchronisation.

## Revendications

1. Circuit de synchronisation (201) pour écrans à circuit de balayage recevant un signal d'entrée de synchronisation horizontale (HSYNCI) comportant des impulsions de synchronisation de ligne (102), un premier type d'impulsion de signalisation (103) en début de trame et un deuxième type d'impulsion de signalisation (104) en fin de trame, un signal d'entrée de synchronisation verticale (VSYNCI) comportant des impulsions de retour trame (100), et un signal d'horloge (CLK), lequel circuit de synchronisation comporte:
- un circuit de génération de synchronisation horizontale (202) pour produire un premier signal de sortie de synchronisation horizontale (HSYNCO1) à partir du signal d'horloge (CLK), et
- un circuit de génération de synchronisation verticale (205) pour produire un premier signal de sortie de synchronisation verticale (VSYNCO1) à partir du premier signal de sortie de synchronisation horizontale (HSYNCO1),
et est caractérisé en ce qu'il comporte:
- un circuit d'analyse de synchronisation horizontale (203) , recevant en entrée le signal d'entrée de synchronisation horizontale (HSYNCI) et le signal d'horloge (CLK), et produisant une valeur (VAL1) représentative de l'intervalle de temps entre deux impulsions de synchronisation de ligne du signal d'entrée de synchronisation horizontale (HSYNCI),
- un circuit de correction de synchronisation horizontale (204) délivrant un second signal de sortie de synchronisation horizontale dépourvu d'impulsions du deuxième type en fin de trame (HSYNCO2) et un signal de détection d'impulsion de signalisation (DET), à partir dudit signal d'entrée de synchronisation horizontale (HSYNCI), du signal d'horloge (CLK) et de la valeur (VAL1) représentative de l'intervalle de temps entre deux impulsions de synchronisation de ligne du signal d'entrée de synchronisation horizontale,
- un circuit d'analyse de synchronisation verticale (206), recevant en entrée ledit signal d'entrée de synchronisation verticale (VSYNCI) et le signal d'entrée de synchronisation horizontale (HSYNCI), et produisant une valeur (VAL2) représentative du nombre de lignes entre deux impulsions de retour trame du signal d'entrée de synchronisation verticale (VSYNCI), et
- un circuit de correction de synchronisation verticale (207) délivrant un second signal de sortie de synchronisation verticale (VSYNCO2) dont l'impulsion de retour de trame est prolongée pendant les impulsions de signalisation du premier type en début de trame, à partir dudit signal d'entrée de synchronisation verticale (VSYNCI), du signal d'entrée de synchronisation horizontale (HSYNCI) et du signal de détection d'impulsion de signalisation (DET).

2. Circuit selon la revendication 1, caractérisé en ce que le circuit de génération de synchronisation horizontale (202) comporte un premier registre (301) dans lequel est mémorisée une valeur représentative de la période du premier signal de sortie de synchronisation horizontale (HSYNCO1).

3. Circuit selon l'une des revendications 1 à 2, caractérisé en ce que le circuit d'analyse de synchronisation horizontale (203) comporte un circuit (402-413) pour mesurer l'intervalle de temps entre deux impulsions de synchronisation de ligne du signal de synchronisation horizontale (HSYNCI) et un deuxième registre (401) pour mémoriser la valeur (VAL1) représentative dudit intervalle de temps.

4. Circuit selon l'une des revendications 1 à 3, caractérisé en ce que le circuit de correction de synchronisation horizontale (204) comporte un circuit (501-516) pour produire le second signal de sortie de synchronisation horizontale (HSYNCO2) ne comprenant pas pas le deuxième type d'impulsion de signalisation (104) en fin de trame.

5. Circuit selon l'une des revendications 1 à 4, caractérisé en ce que le circuit de correction de synchronisation horizontale (204) comporte un circuit (517-519) pour détecter le premier et le deuxième type d'impulsion de signalisation (103 et 104) délivrant le signal de détection d'impulsion de signalisation (DET).

6. Circuit selon la revendication 3 et la revendication 4, caractérisé en ce que le circuit de correction de synchronisation horizontale (204) comporte un troisième registre (501) dans lequel est mémorisée la valeur (VAL1) représentative de l'intervalle de temps entre deux impulsions de synchronisation de ligne du signal de synchronisation horizontale (HSYNCI).

7. Circuit selon l'une des revendications 1 à 6, caractérisé en ce que le circuit de génération de synchronisation verticale (205) comporte un quatrième registre (306) dans lequel est mémorisée une valeur égale au nombre de lignes pendant une période du premier signal de sortie de synchronisation verticale (VSYNCO1).

8. Circuit selon l'une des revendications 1 à 7, caractérisé en ce que le circuit d'analyse de synchronisation verticale (206) comporte un circuit (416-427) pour mesurer un nombre de lignes entre deux impulsions de retour trame du signal d'entrée de synchronisation verticale (VSYNCI) et un cinquième registre (415) pour mémoriser la valeur (VAL2) représentative dudit nombre de lignes.

9. Circuit selon l'une des revendications 1 à 8, caractérisé en ce que le circuit de correction de synchronisation verticale (207) comporte un circuit (520-535) pour produire le second signal de sortie de synchronisation verticale (VSYNCO2) dont les impulsions de retour trame sont prolongées pendant les impulsions de signalisation du premier type (103) du signal d'entrée de synchronisation horizontale (HSYNCI).

10. Utilisation d'un circuit de synchronisation (201) selon l'une des revendications 1 à 9 dans un moniteur de télévision.

## Patentansprüche

1. Synchronisationsschaltung (201) für Bildschirme mit Ablenkkreisen, die ein horizontales Synchronisationseingangssignal (HSYNCI) mit Zeilensynchronisationspulsen (102), eine erste Art von Kennzeichnungspulsen für den Anfang eines Teilbildes (103) und eine zweite Art von Kennzeichnungspulsen für das Ende eines Teilbildes (104), ein vertikales Synchronisationseingangssignal (VSYNCI) mit Teilbildrücklaufpulsen (100) und ein Taktsignal (CLK) empfängt, mit:
- einer Schaltung zur Erzeugung einer horizontalen Synchronisation (202), die ein erstes horizontales Synchronisationsausgangssignal (HSYNCO1) aufgrund des Taktsignals (CLK) erzeugt,
- einer Schaltung zur Erzeugung einer vertikalen Synchronisation (205), die ein erstes vertikales Synchronisationsausgangssignal (VSYNCO1) aufgrund des ersten horizontalen Synchronisationsausgangssignals (HSYNCO1) erzeugt,
gekennzeichnet durch:
- eine Analyseschaltung der horizontalen Synchronisation (203), die am Eingang das horizontale Synchronisationseingangssignal und das Taktsignal (CLK) empfängt und einen Wert (VAL1) erzeugt, der das Zeitintervall zwischen zwei Zeilensynchronisationspulsen des horizontalen Synchronisationseingangssignals(HSYNCI) darstellt,
- eine Korrekturschaltung der horizontalen Synchronisation (204), die ein zweites horizontales Synchronisationsausgangssignal ohne zweite Pulsarten für das Ende eines Teilbildes (HSYNCO2) und ein Detektionssignal eines Kennzeichnungspulses (DET) liefert aufgrund des horizontalen Synchronisationseingangssignals (HSYNCI), des Taktsignals (CLK) und des Wertes (VAL1), der dem Zeitintervall zwischen zwei Zeilensynchronisationspulsen des horizontalen Synchronisationseingangssignals entspricht,
- eine Analyseschaltung der vertikalen Synchronisation (206), die am Eingang das vertikale Synchronisationseingangssignal (VSYNCI) und das horizontale Synchronisationseingangssignal (HSYNCI) empfängt und einen Wert (VAL2) erzeugt, der der Anzahl der Zeilen zwischen zwei Teilbildrücksetzuncspulsen des vertikalen Synchronisationseingangssignal (VSYNCI) entspricht, und
- eine Korrekturschaltung der vertikalen Synchronisation (207), die ein zweites vertikales Synchronisationsausgangssignal (VSYNCO2) erzeugt, dessen Teilbildrücklaufpuls während der ersten Art von Kennzeichnungspulsen für das Ende eines Teilbildes aufgrund des vertikalen Synchronisationseingangssignals (VSYNCI), des horizontalen Synchronisationseingangssignals (HSYNCI) und des Detektionssignals eines Kennzeichnungspulses (DET) verlängert wird.

2. Schaltung nach Anspruch 1, dadurch gekennzeichnet, daß die Schaltung zur Erzeugung der horizontalen Synchronisation (202) ein erstes Register (301) aufweist, in dem ein Wert gespeichert ist, der die Zeitdauer des ersten horizontalen Synchronisationsausgangssignals (HSYNCO1) darstellt.

3. Schaltung nach einem der Ansprüche 1 bis 2, dadurch gekennzeichnet, daß die Analyseschaltung der horizontalen Synchronisation (203) eine Schaltung (402-413) aufweist, die das Zeitintervall zwischen zwei Zeilensynchronisationspulsen des horizontalen Synchronisationssignals (HSYNCI) mißt und ein zweites Register (401), das den Wert (VAL1) speichert, der dieses Zeitintervall darstellt.

4. Schaltung nach einem der Ansprüche 1 bis 3, dadurch gekennzeichnet, daß die Korrekturschaltung der horizontalen Synchronisation (204) eine Schaltung (501-516) aufweist, die das zweite horizontale Synchronisationsausgangssignal (HSYNCO2) erzeugt, das nicht die zweite Art von Kennzeichnugspulsen (104) für das Ende eines Teilbildes aufweist.

5. Schaltung nach einem der Ansprüche 1 bis 4, dadurch gekennzeichnet, daß die Korrekturschaltung der horizontalen Synchronisation (204) eine Schaltung (517-519) aufweist, die die erste und die zweite Art von Kennzeichnungspulsen (103 und 104) detektiert und das Detektionssignal eines Kennzeichnungspulses (DET) liefert.

6. Schaltung nach Anspruch 3 und 4, dadurch gekennzeichnet, daß die Korrekturschaltung der horizontalen Synchronisation (204) ein drittes Register (501) aufweist, in welchem der Wert (VAL1) gespeichert ist, der das Zeitintervall zwischen zwei Zeilensynchronisationspulsen des horizontalen Synchronisationssignals (HSYNCI) darstellt.

7. Schaltung nach einem der Ansprüche 1 bis 6, dadurch gekennzeichnet, daß die Schaltung zur Erzeugung der vertikalen Synchronisation (205) ein viertes Register aufweist, in welchem ein Wert gespeichert ist, der der Anzahl der Zeilen während einer Periode des ersten vertikalen Synchronisationsausgangssignals (VSYNCO1) entspricht.

8. Schaltung nach einem der Ansprüche 1 bis 7, dadurch gekennzeichnet, daß die Analyseschaltung der vertikalen Synchronisation (206) eine Schaltung (416 -427) aufweist, die die Anzahl der Zeilen zwischen zwei Teilbildrücklaufpulsen des vertikalen Synchronisationseingangssignals (VSYNCI) mißt, und ein fünftes Register (415), das den Wert (VAL2) speichert, der die Anzahl der Zeilen darstellt.

9. Schaltung nach einem der Ansprüche 1 bis 8, dadurch gekennzeichnet, daß die Korrekturschaltung der vertikalen Synchronisation (207) eine Schaltung (520-535) aufweist, die das zweite vertikale Synchronisationsausgangssignal (VSYNCO2) erzeugt, dessen Teilbildrücklaufpulse während der ersten Art von Kennzeichnungspulsen (103) des horizontalen Synchronisationseingangssignals (HSYNCI) verlängert werden.

10. Anwendung einer Synchronisationsschaltung (201) nach einem der Ansprüche 1 bis 9 in einem Fernsehmonitor.

## Claims

1. Synchronization circuit (201) for screens with a scanning circuit receiving a horizontal synchronization input signal (HSYNCI) including line synchronization pulses (102), a first type of signalling pulse (103) at the start of the frame and a second type of signalling pulse (104) at the end of the frame, a vertical synchronization input signal (VSYNCI) including frame flyback pulses (100), and a clock signal (CLK), the said synchronization circuit including:
- a horizontal synchronization generation circuit (202) for producing a first horizontal synchronization output signal (HSYNCO1) from the clock signal (CLK), and
- a vertical synchronization generation circuit (205) for producing a first vertical synchronization output signal (VSYNCO1) from the first horizontal synchronization output signal (HSYNCO1),
and is characterised in that it includes:
- a horizontal synchronization analysis circuit (203), receiving at its input the horizontal synchronization input signal (HSYNCI) and the clock signal (CLK), and producing a value (VAL1) representing the interval of time between two line synchronization pulses of the horizontal synchronization input signal (HSYNCI),
- a horizontal synchronization correction circuit (204) delivering a second horizontal synchronization output signal with no pulses of the second type at the end of the frame (HSYNCO2) and a signalling pulse detection signal (DET), from the said hprizontal synchronization input signal (HSYNCI), the clock signal (CLK) and the value (VAL1) representing the interval of time between two line synchronization pulses of the horizontal synchronization input signal,
- a vertical synchronization analysis circuit (206), receiving at its input the said vertical synchronization input signal (VSYNCI) and the horizontal synchronization input signal (HSYNCI), and producing a value (VAL2) representing the number of lines between two frame flyback pulses of the vertical synchronization input signal (VSYNCI), and
- a vertical synchronization correction circuit (207) delivering a second vertical synchronization output signal (VSYNC02) whose frame flyback pulse is prolonged during the signalling pulses of the first type at the start of the frame, from the said vertical synchronization input signal (VSYNCI), the horizontal synchronization input signal (HSYNCI) and the signalling pulse detection signal (DET).

2. Circuit according to Claim 1, characterised in that the horizontal synchronization generation circuit (202) has a first register (301) in which there is stored a value representing the period of the first horizontal synchronization output signal (HSYNCO1).

3. Circuit according to one of Claims 1 to 2, characterised in that the horizontal synchronization analysis circuit (203) includes a circuit (402-413) for measuring the interval of time between two line synchronization pulses of the horizontal synchronization signal (HSYNCI) and a second register (401) for storing the value (VAL1) representing the said interval of time.

4. Circuit according to one of Claims 1 to 3, characterised in that the horizontal synchronization correction circuit (204) includes a circuit (501-516) for producing the second horizontal synchronization output signal (HSYNCO2) not comprising the second type of signalling pulse (104) at the end of the frame.

5. Circuit according to one of Claims 1 to 4, characterised in that the horizontal synchronization correction circuit (204) includes a circuit (517-519) for detecting the first and second type of signalling pulse (103 and 104) delivering the signalling pulse detection signal (DET).

6. Circuit according to Claim 3 and Claim 4, characterised in that the horizontal synchronization correction circuit (204) has a third register (501) in which there is stored the value (VAL1) representing the interval of time between two line synchronization pulses of the horizontal synchronization signal (HSYNCI).

7. Circuit according to one of Claims 1 to 6, characterised in that the vertical synchronization generation circuit (205) has a fourth register (306) in which there is stored a value equal to the number of lines during a period of the first vertical synchronization output signal (VSYNCO1).

8. Circuit according to one of Claims 1 to 7, characterised in that the vertical synchronization analysis circuit (206) includes a circuit (416-427) for measuring a number of lines between two frame flyback pulses of the vertical synchronization input signal (VSYNCI) and a fifth register (415) for storing the value (VAL2) representing the said number of lines.

9. Circuit according to one of Claims 1 to 8, characterised in that the vertical synchronization correction circuit (207) includes a circuit (520-535) for producing the second vertical synchronization output signal (VSYNCO2) whose frame flyback pulses are prolonged during the signalling pulses of the first type (103) of the horizontal synchronization input signal (HSYNCI).

10. Use of a synchronization circuit (201) according to one of Claims 1 to 5 in a television monitor.
